# EUROPEAN PATENT APPLICATION

(11) **EP 0 905 646 A1**
(43) Date of publication of application: **31.03.1999**
(21) Application number: 98307775.1
(22) Date of filing: 24.09.1998
(51) Int. Cl.: G06K 11/18, G06K 11/08, G06K 9/00

(54) **Pointing and fingerprint identifier mechanism for a computer system**

(30) Priority: 30.09.1997 US 941165
(71) Applicant: Compaq Computer Corporation, Houston Texas 77070 (US)
(72) Inventor: Mato, Stephan A., Jr., Katy, Texas 77450 (US)
(74) Representative: Brunner, Michael John

(57) **Abstract**

A computer system controller in the form of a pointing and fingerprint identifier mechanism provides both a pointing mode and a fingerprint identification mode. In the pointing mode, the mechanism serves as a pointing device for cursor movement control. In the fingerprint identification mode, the mechanism serves as a fingerprint identification device to prevent unauthorized use. These modes are generated and controlled by device code executed by control logic within the mechanism. The device code thus integrates pointing functions and fingerprint identification functions in a single device. The need for a distinct fingerprint scanner separate from a pointing device in a computer system is thereby eliminated.

## Description

The present invention relates to a pointing and fingerprint identifier mechanism of a computer system, in particular, a mechanism having a pointing mode and a fingerprint identification mode.

As more and more sensitive data applications move to client/server systems, the concern with computer security has grown. Passwords are commonly used to prevent unauthorized personnel from accessing a network. Passwords, however, have significant limitations. Passwords tend to be vulnerable to discovery by unauthorized personnel as users are reluctant to change them and frequently write them down. In addition, there are, of course, certain personnel with the ability to bypass or decipher a user's password.

Two common categories of network authentication techniques used to supplement or replace password protection are authentication tokens and biometrics. Authentication tokens require a user to present a physical object in addition to applying a user name and password to gain network access. The token is registered with the server of the network system, and the algorithm for generating the token code is encrypted on the server. Some examples of tokens are smart cards, cards having a personal identification number (PIN), and an access device allowing numbered key pad entry. The drawback of tokens is that they may easily be stolen or misplaced particularly when a number of personnel have access to them.

Biometrics uses a physical characteristic unique to an individual, such as fingerprints, handwriting, or voice and facial features, to authenticate a network user. As an authentication technique, biometrics has been more promising. Unlike token and password authentication techniques, biometrics does not require a user to carry around tokens or remember passwords.

Using fingerprinting as an authentication technique for network systems, however, has required a distinct fingerprint scanner in addition to the typical hardware ofa computer system. An internal fingerprint scanner or recognition device for instance has been connected to a monitor of a computer to allow for fingerprint identification when a user's finger is placed on touch-screen fields on the monitor as described in US-A-5 420 936. This dedicated hardware necessary for fingerprint identification has undesirably required a significant amount of space within a computer system. A fingerprint scanner also has been provided as an external peripheral device of the computer system. Such a scanner, however, has required a significant amount of desktop surface area.

Turning from the field of network authentication to the separate field of pointing devices in a computer system, movement of a cursor may be controlled by a user's finger contacting a glass optical filter termed a "window" of a pointing device, as described in US-A-5 578 817. With the user's finger positioned on the surface of the window, a fingerprint image is formed on an optical sensor by using a number of lenses to provide an optical path from the window to the optical sensor for light emitted from a light source. The light source is internal to the pointing device and is positioned to reflect light from the window to the optical sensor. So far as is known, a single device for integrating cursor control and fingerprint identification in a computer system has not been disclosed, discussed or described in terms that one skilled in the art could make or use any such device. Moreover, conventional pointing devices such as trackballs, touch pads, and force sticks of a computer system have been relatively large in volume and have required a relatively large surface area.

Briefly, the present invention provides for a pointing and fingerprint identifier mechanism of a computer system. The mechanism has a pointing mode and a fingerprint identification mode. In the pointing mode, the mechanism serves as a pointing device. In the fingerprint identification mode, the mechanism serves as a fingerprint identification device. These modes are generated and controlled by device code executed by control logic within the mechanism. The device code thus allows for integration of pointing functions and fingerprint identification functions in a single device. In addition, the pointing and fingerprint identifier mechanism saves desktop surface area by eliminating the need for a distinct pointing device and a distinct fingerprint identification device.

A better understanding ofthe present invention can be obtained when the following detailed description of the preferred embodiment is considered in conjunction with the following drawings, in which:
Figure 1 is a simplified schematic diagram of a network of computer systems;
Figure 2 is a simplified schematic diagram of a computer system of Figure 1 including a pointing and fingerprint identifier mechanism of the present invention;
Figures 3A, 3B, and 3C are is a schematic diagrams of the components of the pointing and fingerprint identifier mechanism of Figure 2;
Figures 4A-4B are flow charts of the process for controlling the fingerprint identification mode and pointing mode ofthe pointing and fingerprint identifier mechanism of Figures 2 and 3A-3C; and
Figure 4C is a flow chart of the process for generating the pointing mode of the pointing and fingerprint identifier mechanism of Figures 2 and 3A-3C in accordance with the control process of Figures 4A-4B.

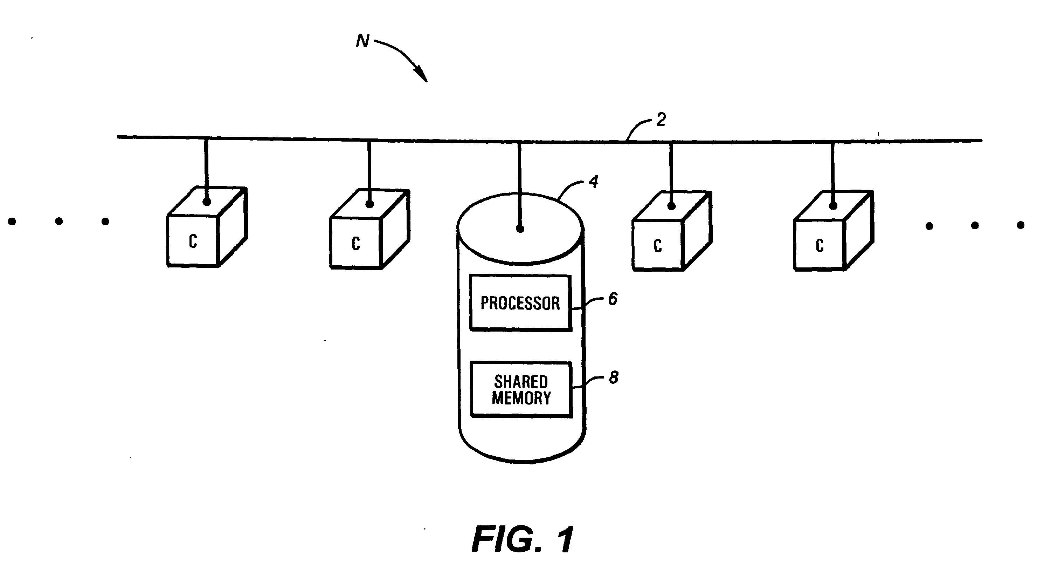

Turning now to the drawings, Figure 1 is a schematic diagram of a Network N. The network N includes multiple computer systems C coupled to one another by a common bus 2. Each computer system C is coupled through the common bus 2 to a server 4. The server 4 includes a processor 6 coupled to a memory 8. The network N may be configured for a client/server environment. In such an environment, each computer or workstation C is a client ofthe server 4. Other typical components ofa computer network which are unnecessary to gain an understanding of the present invention have been omitted.

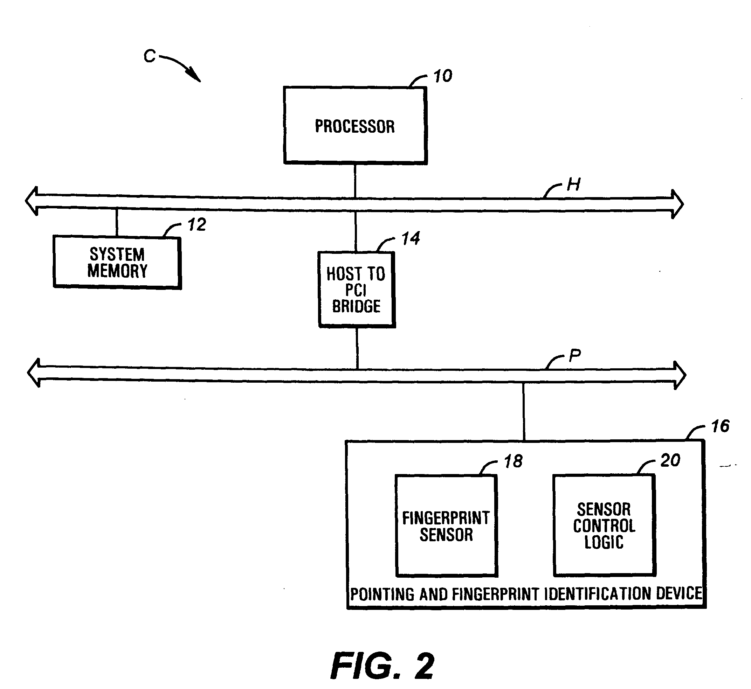

Figure 2 is a simplified schematic diagram of each computer system C of the network N. The computer systems C each include a processor 10 and a system memory 12 connected by a host bus H. The host bus H is coupled to a PCI bus P through a host to PCI bridge 14. The PCI bus P is further coupled to the pointing and fingerprint identifier mechanism or identification device 16 of the present invention. The device 16 includes a fingerprint sensor 18 and sensor control logic 20. Other typical components of a computer which are unnecessary to gain an understanding of the present invention have been omitted. It should be understood that the pointing and fingerprint identifier mechanism of the present invention may be provided in a single computer such as a portable computer or may be provided in a computer system of a network.

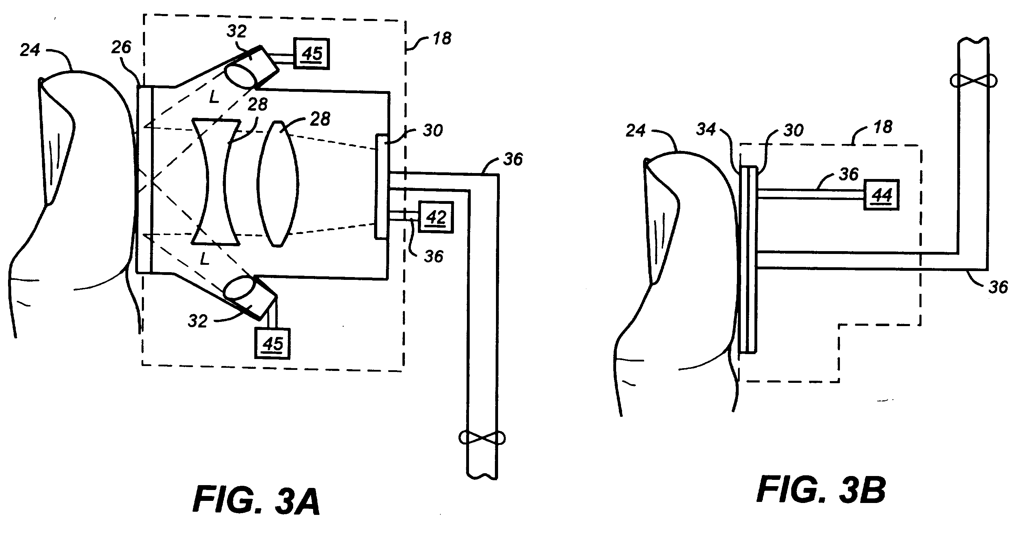

Considering the pointing and fingerprint identifier mechanism 16 more in detail, the fingerprint sensor 18 may be optical as shown in sensor embodiment (Figure 3A) or capacitive as shown in sensor embodiment (Figure 3B). For the optical embodiment, the fingerprint sensor 18 includes an external lens 26 having a flat or curved surface on which a user's finger 24 may be placed. The external lens 26 may have a wide aperture so that objects not placed on the lens 26 are out of focus. In this way when a user's finger 24 is placed on the lens 26, other objects are not sensed by the fingerprint sensor 18. The sensor 18 internally includes light sources 32, internal lenses 28, and an optical sensor 30 made of suitable photoconductive materials. An example of such an optical sensor 30 is a charge-coupled-device (CCD) sensor. The light sources 32 may be of visible or infrared light and provide adequate light energy to illuminate the user's finger 24. An example of a suitable light source 32 is a light emitting diode (LED). The light sources 32 are preferably operated in a pulsed mode to conserve battery life.

Light rays as shown schematically at L are emitted from the light sources 32 to the external lenses 26. When the user's finger 24 is placed on the external lens, the light L reflects off of the external lens 26 and passes through internal lenses 28 situated in a focal plane between the external lens 26 and the optical sensor 30. The internal lenses 28 focus the light L for collection by the optical sensor 30. The user's fingerprint optically represents a unique pattern of light and dark spaces to the optical sensor 30. By collecting the focused light from the internal lenses 28, the optical sensor 30 allows a fingerprint image of the user's finger 24 to be formed on a portion of the optical sensor 30. The illumination of the light sources 32 is controlled by sensor control logic 38 through a light source control bus 45.

Suitable focal lengths for the lenses 26 and 28 and a suitable optical path length from the external lens 26 to the optical sensor 30 are used to allow for formation of a fingerprint image on the sensor 30. In addition, the internal lenses 28 and optical sensor 30 are optically aligned and positioned to achieve a suitable degree of reflection ofthe light L to the sensor 30. For instance, the lenses 28 and optical sensor 30 may be oriented to allow for total internal reflection of the light L in the absence of interference. In such a case, a user's finger 24 present on the external lens 26 cancels the reflection of light L in the areas where the user's finger 24 contacts the lens 26.

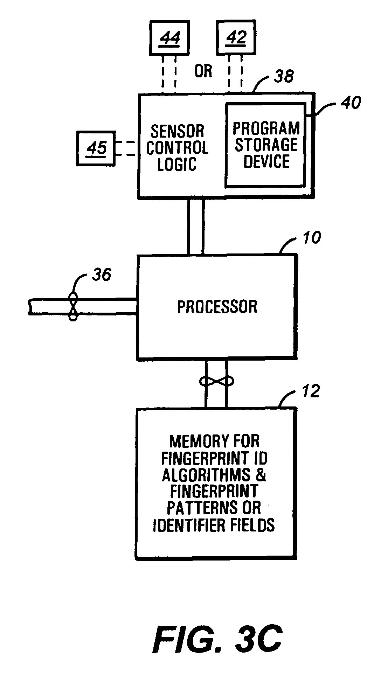

The optical sensor 30 may include a pixel array, a signal processor for processing optical information, and a timing driver for controlling the sampling time for the pixel array. It should be understood by those in the art that the pixel array may be a linear array or an area array. The optical sensor 30 collects the light energy representing the fingerprint image and converts it to electrical signals having a digital form. Turning to Figure 3C, the digital data 36 is routed from the optical sensor 30 to the sensor control logic 38 through an optical array control bus 42. The digital data 36 is also provided to the processor 10 of the computer C. If the computer system C is on a network N, the processor 10 is capable of sending the digital data 36 to the processor 6 of the server 2.

Alternatively, the fingerprint sensor 18 may have a capacitive embodiment (Fig. 3B) rather than an optical embodiment (Fig. 3A). The capacitive embodiment includes a capacitive plate 34 for placement of the user's finger 24. The user's finger 24 serves as the other capacitive plate. The capacitive plate 34 may be formed of metal or other suitable capacitive materials and includes a pixel array. In response to changes in capacitance, the capacitive plate 34 forms a fingerprint image. For instance, the sensor 18 may measure changes in capacitance between the pixels of the pixel array. While the sensor 18 may use only a single capacitive plate 34, the use of additional capacitive plates for a fingerprint sensor is also contemplated. The capacitive sensor 18 converts the fingerprint image formed on the capacitive plate 34 to digital form 36. Turning to Figure 3C, the digital data 36 is provided to the sensor control logic 38 through a capacitive sensor control bus 44. The sensor control logic 38 may be an embedded controller ofthe pointing and fingerprint identification device 16. As in the optical embodiment, the digital data 36 is also provided to the processor 10 of the computer system C for the capacitive embodiment B. If the computer system C is on a network N, the processor 10 is capable of sending the data to the processor 6 of the server 2.

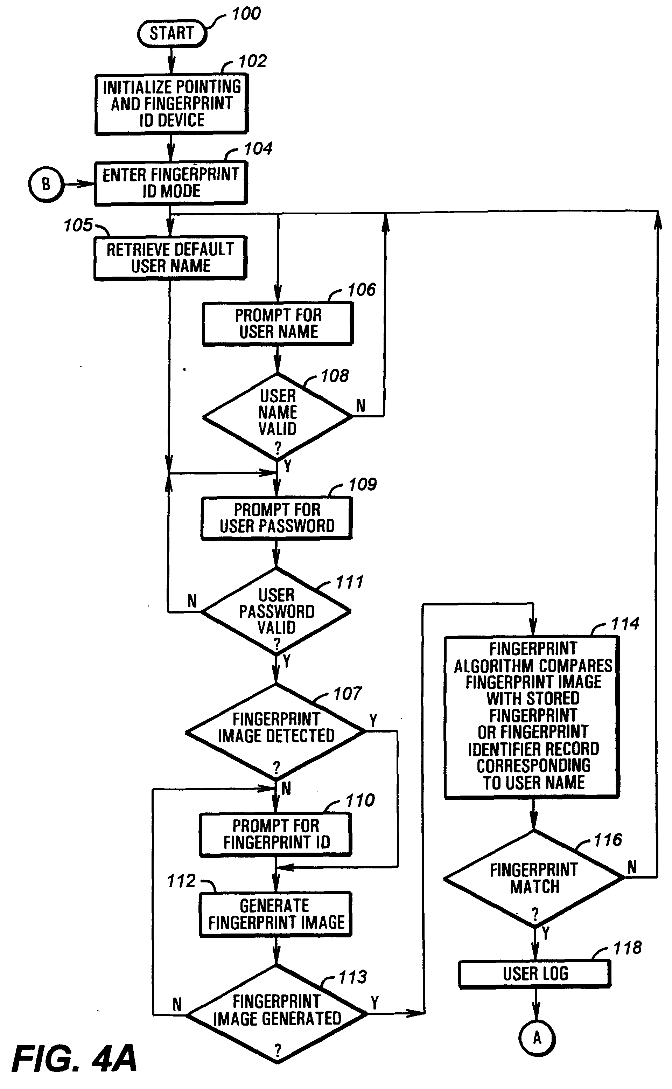

The sensor control logic 38 includes a program storage device 40 such as a read-only-memory which stores device code 46 to be executed by the sensor control logic 38. The device code 46 generates a pointing mode and a fingerprint identification mode ofthe pointing and fingerprint identification device 16. In the pointing mode, the device 16 serves as a pointing device. In the fingerprint identification mode, the device 16 serves as a fingerprint identification device. Operation and control ofthese modes are illustrated by Figures 4A-4C. At step 100, the control process begins with the computer system C being powered. Control then passes to step 102 wherein the pointing and fingerprint identification device 16 of the present invention is initialized. This initialization step may include accessing a number of services that interface with firmware and hardware to achieve an initialized configuration for the device 16. This initialization step should also include initializing resolution values and other parameters particular to the fingerprint identification mode of the pointing and fingerprint identification device 16. After this initialization, the device 16 is configured for a fingerprint identification mode.

Next, in step 104, the device 16 enters the fingerprint identification mode. Within the fingerprint identification mode, the pointing and fingerprint identification device 16 functions as a typical fingerprint scanner. If the computer system C is in a single computer, the device 16 retrieves a default user name in step 105. From step 105, control proceeds to step 109 wherein a prompt is provided for a password. If the computer system C is on a network N, control proceeds to step 106 wherein a prompt is provided for a user name. The validity of the entered user name is determined in step 108. If the user name is invalid, control returns to step 106 wherein a prompt is again provided for a user name. If the user name is valid, control passes to step 109 wherein the user is prompted for a password. Password protection is an optional feature of the fingerprint identification mode. Further, it should be understood that a user may be prompted for a series of passwords rather than a single password. The validity of the user password entered is determined in step 111. If the password is invalid, control returns to step 109 wherein the user is again prompted for a password.

If the password is valid, control proceeds to step 107 wherein the device code 46 checks for a fingerprint image on the fingerprint sensor 18. If a fingerprint image is detected, control passes to step 112 wherein a fingerprint image is generated. If a fingerprint image is not detected in step 107, control proceeds to step 110 wherein the user is prompted for fingerprint identification. The user's finger 24 may then be placed onto the fingerprint sensor 18. At this point, the device code 46 waits for a click of a button of the device 16, such as a button typically provided on a conventional pointing device, indicating the user is ready for fingerprint identification. After such a click is detected, the device code 46 instructs the device 16 generate a fingerprint image in step 112. Clicking a button of the device 16 thereby serves as a backup to self-detection of a fingerprint image by the device 16. In step 113, it is determined whether a fingerprint image was generated during step 112. If generation of a fingerprint image was not successful, control returns to step 110 whereby the user is again prompted for fingerprint identification. This may occur for a number of reasons. For example, a user's finger 24 may not be in contact with the fingerprint sensor 18. This may also occur if the user's finger is not making a contact of sufficient area with the sensor 18.

If a fingerprint image is successfully generated, control proceeds to step 114. In step 114, if the computer system C is on a network N, then code stored in the memory 8 of the server 4 for initiating a fingerprint algorithm 12 is executed by the processor of the server 4. If the computer system C is a single computer, then in step 114 code stored in the memory 12 of the computer C for initiating a fingerprint algorithm is executed by the processor 10 ofthe computer system C. The fingerprint algorithm compares the generated fingerprint image with a stored fingerprint or fingerprint identification record corresponding to the user name. Algorithms suitable for fingerprint identification are conventional and known to those in the art. The fingerprint or fingerprint identification record corresponding to any authorized user name has been stored in the memory 8 of the server 4. A fingerprint identification record is a unique set of values representing a fingerprint image. The fingerprint data for each user may be encrypted to reduce the likelihood of an unauthorized person gaining access to such data. Storing a fingerprint identifier record is a known alternative to storing an actual fingerprint image.

In step 116, it is determined whether a fingerprint match was made. If there is a match between the fingerprint image collected and the stored fingerprint image or identifier record, control passes to step 118 wherein the user is logged in. If there is not a fingerprint match, control in a computer system C on a network N returns to step 106 wherein the user is again prompted for a user name. If there is not a fingerprint match in a single computer system C, control returns to step 105 wherein the default user name is retrieved. If the user has been authenticated by fingerprint identification, the device 16 in step 120 exits the fingerprint identification or ID mode. In step 122, the device 16 enters the pointing mode. In this mode, the pointing and fingerprint identification device 16 serves as a pointing device.

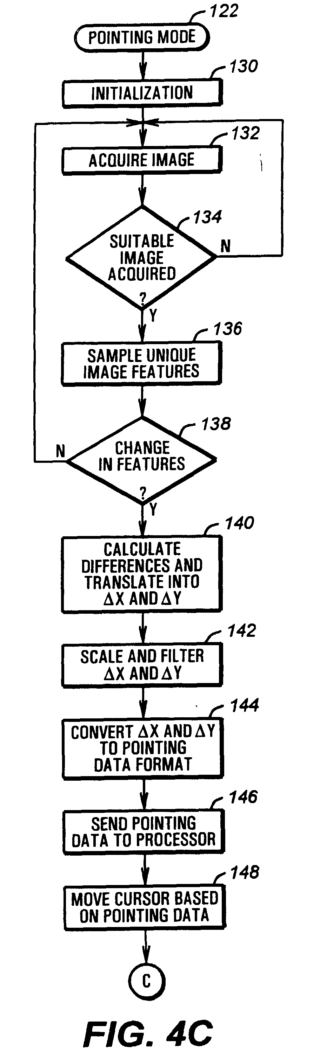

Turning to Figure 4C, the process for controlling the pointing mode ofthe pointing and fingerprint identification device 16 or fingerprint device 16 shown. In step 130, the device 16 is initialized for a pointing mode. Any setting of the device 16 for use in a pointing mode which differs from settings in a fingerprint identification mode are reset for the pointing mode of the device 16. An example of such a setting may be the resolution of the fingerprint image. The resolution used by the device 16 for the pointing mode may be less than the resolution used by the device 16 for the fingerprint identification mode.

Next in step 132, the pointing and fingerprint identification device 16 acquires a fingerprint image using an optical or capacitive fingerprint sensor 18. In step 134, a determination is made whether a suitable image was acquired. If a suitable image was not acquired, control returns to step 132 where a fingerprint image is again acquired. If a suitable image was acquired, control passes to step 136 wherein the unique features of the fingerprint image such as locations where lines in a fingertip curve, split, or peak are sampled. In step 138, the device 16 samples the current unique fingerprint features and compares those features to the previous sample of fingerprint features. If there are no changes, control returns to step 132 wherein a fingerprint image is again acquired.

If there are changes in the fingerprint features between a current sample and a previous sample in step 138, control passes to step 140 wherein the device code 46 calculates the differences in these features and translates those differences into Δx and Δy. Δx represents any relative horizontal movement of these features, and Δy represents any relative vertical movement of these features. Δx and Δy differences are not only detected by a user sliding a finger 24 across the sensor 18, but Δx and Δy are also detected when a user rocks a finger 24 contacting the sensor 18 in a particular direction. Next, in step 142, the device code 46 scales and filters Δx and Δy as an intermediary processing stage. Δx and Δy are then converted to a pointing data format in step 144. In step 146, the pointing data is provided to the processor 10 of the computer system S. The processor 10 then uses the pointing data to determine the movement of a cursor on a screen of the computer C in step 148 as is known in the art. The cursor is thus moved in a manner comparable to the detected movement of fingerprint features.

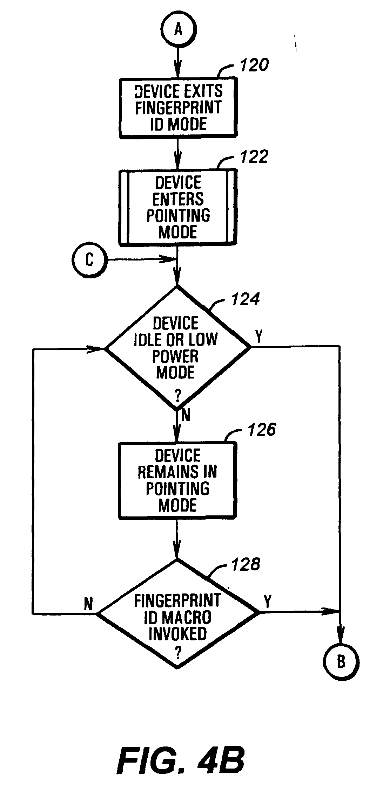

From step 148, control passes to step 124 (Fig. 4B) wherein it is determined if there has been an absence of any change in unique fingerprint image features within a certain period oftime and whether the computer system C has been placed in a low power mode. In either situation, it may be desirable for the pointing and fingerprint identification device 16 to return to a fingerprint identification mode. If the device 16 has been idle or the computer system C has been placed in a low power mode, control returns to step 104 (Fig. 4A) wherein the fingerprint identification mode is reentered. If the pointing and fingerprint identification device 16 has not been idle and the computer system C has not been placed in a low power mode, control passes to step 126 (Fig. 4B) wherein the device 16 remains in a pointing mode. Next, in step 128, the device code 46 determines whether a fingerprint identification macro has been invoked. The macro may be invoked by a certain combination of keystrokes on the keyboard. A user may desire to invoke a fingerprint identification macro when a user intends to leave the computer C and does not wish to power off the computer system C. If the fingerprint identification macro is invoked, control passes to step 104 (Fig. 4A) wherein the pointing and fingerprint identification device 16 reenters a fingerprint identification mode. If a fingerprint identification macro has not been invoked, control returns to step 124 wherein the device code 46 again determines if the computer system C is in a low power mode or whether the device 16 has been idle for a particular period oftime. These steps of determining whether the device 16 is idle, whether the computer system C has been placed in a low power mode, and whether a fingerprint identification macro has been invoked are optional features of the fingerprint identification mode of the pointing and fingerprint identification device 16 which preferably are configurable by a user.

From the foregoing, it can be seen that the present invention is a single device providing pointing and fingerprint identification functions. In contrast, conventional computer systems with pointing and fingerprint identification capabilities have required a distinct pointing device and a distinct fingerprint scanner. A pointing device and a fingerprint scanner have both required a significant amount of desktop surface area. Thus, the present invention by providing device code 46 for generating a pointing mode of the device 16 and for generating a fingerprint identification mode of the device 16 achieves an integration of pointing functions and fingerprint identification functions into a single device of a computer system C.

## Claims

1. A computer system pointing and fingerprint identifier mechanism, the mechanism having a pointing mode and a fingerprint identification mode, the device comprising:
a fingerprint sensor for acquiring a digital fingerprint image from a user's finger contacting said fingerprint sensor; and
sensor control logic coupled to said fingerprint sensor for retrieving the digital fingerprint image from said fingerprint sensor, converting the fingerprint image to pointing data if said pointing and fingerprint identifier mechanism is in the pointing mode, and comparing the digital fingerprint image with stored fingerprint data if said pointing and fingerprint identifier mechanism is in the fingerprint identification mode.

2. The mechanism of claim 1, wherein said sensor control logic provides the digital fingerprint image to a network server to be compared with fingerprint data stored by the network server if said pointing and fingerprint identifier mechanism is in the fingerprint identification mode.

3. The mechanism of claim 1 or claim 2, wherein said fingerprint sensor is an optical sensor.

4. The mechanism of claim 3, said optical fingerprint sensor comprising:
an external lens for contacting a user's finger;
one or more internal lenses for focusing a fingerprint image of the user's finger;
one or more light sources for illuminating the user's finger; and
an optical sensor for forming the fingerprint image of the user's finger on said optical sensor.

5. The mechanism of claim 3 or claim 4, wherein said optical sensor comprises a charge-coupled-device (CCD).

6. The mechanism of claim 4, wherein said light sources are light emitting diodes (LEDs).

7. The mechanism of claim 4, wherein said sensor control logic controls the illumination of said light sources.

8. The mechanism of claim 4, wherein said external lens comprises a curved surface for placement of the user's finger.

9. The mechanism of claim 4, wherein said external lens comprises a flat surface for placement of the user's finger.

10. The mechanism of claim 1 or claim 2, wherein said fingerprint sensor is a capacitive sensor.

11. The mechanism of claim 10, wherein said capacitive fingerprint sensor comprises a capacitive plate for acquiring a fingerprint image responsive to contact by the user's finger.

12. The mechanism of any of claims 1 to 11, wherein said sensor control logic is an embedded microcontroller.

13. The mechanism of any of claims 1 to 11, wherein said sensor control logic comprises said program storage device.

14. A computer system having integrated pointing and fingerprint identification capabilities, comprising:
a processor;
a pointing and fingerprint identifier mechanism coupled to said processor and having a pointing mode and a fingerprint identification mode, said mechanism serving as a pointing device in a pointing mode and serving as a fingerprint identifier in a fingerprint identification mode, comprising:
a program storage device, storing:
a code for generating the pointing mode of said pointing and fingerprint identifier mechanism; and
a code for generating the fingerprint identification mode of said pointing and fingerprint identifier mechanism.

15. The computer system of claim 14, said program storage device further storing:
a code for transitioning between the pointing mode and the fingerprinting identification mode of said pointing and fingerprint identifier mechanism.

16. The computer system of claim 14 or claim 15, including a pointing and fingerprint identifier mechanism according to any of claims 1 to 13.

17. The computer system of any of claims 14 to 16, wherein said processor is coupled to a network server storing fingerprint data and a fingerprint identification algorithm.

18. The computer system of claim 17, wherein said processor sends a fingerprint image of a user to said network server.

19. The computer system of claim 17 or claim 18, wherein said network server executes code for initiating the fingerprint identification algorithm.

20. A method of integrating pointing and fingerprint identification for a single device of a computer system, the device having a fingerprint identification mode and a pointing mode, comprising the steps of:
placing said device in a fingerprint identification mode;
controlling the fingerprint identification mode of said device;
placing said device in a pointing mode; and
controlling the pointing mode of said device.

21. The method of claim 20, wherein said step of controlling the fingerprint identification mode comprises the step of comparing a digital fingerprint image of a user acquired by a sensor of said device with stored fingerprint data corresponding to a user name.

22. The method of claim 20, wherein said step of controlling the fingerprint identification mode comprises the step of comparing a password entered by a user with a stored password corresponding to a user name.

23. The method of any of claims 20 to 22, wherein said step of controlling the pointing mode of said device comprises the step of sampling a fingerprint image of a user acquired by a sensor of said device to detect movement of the user's finger.

24. The method of claim 20, wherein said step of placing said device in a fingerprint identification mode comprises the step of detecting if the computer system is in a low power mode.

25. The method of claim 20, wherein said step of placing said device in a fingerprint identification mode comprises the step of detecting if the device has been idle for a predetermined period of time.

26. A method of controlling operation of a computer with a fingerprint mechanism while preventing unauthorized use of the computer, comprising the steps of:
detecting presence of a user's finger on the fingerprint mechanism;
verifying the finger placed on the fingerprint mechanism is from an authorized user; and
controlling the computer with the fingerprint mechanism.

27. The method of claim 26, wherein said verifying step comprises the step of entering a fingerprint identification mode of the fingerprint mechanism.

28. The method of claim 26 or claim 27, wherein said controlling step comprises the step of entering a pointing mode of the fingerprint mechanism.
